(19) Europäisches Patentamt European Patent Office Office européen des brevets

(11) **EP 3 279 157 A1**

(12) **EUROPEAN PATENT APPLICATION**
published in accordance with Art. 153(4) EPC

(43) Date of publication:
**07.02.2018 Bulletin 2018/06**

(51) Int Cl.:
*C03C 21/00* (2006.01)   *B60J 1/00* (2006.01)
*C03B 23/023* (2006.01)   *C03C 3/083* (2006.01)
*C03C 3/085* (2006.01)   *C03C 3/087* (2006.01)
*C03C 3/091* (2006.01)   *C03C 3/093* (2006.01)
*C03C 17/22* (2006.01)   *C03C 17/23* (2006.01)

(21) Application number: **16772504.3**

(22) Date of filing: **23.03.2016**

(86) International application number:
**PCT/JP2016/059252**

(87) International publication number:
**WO 2016/158623 (06.10.2016 Gazette 2016/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.03.2015 JP 2015072002**

(71) Applicant: **Asahi Glass Company, Limited
Tokyo 100-8405 (JP)**

(72) Inventors:
 • **ISHIBASHI Hiroki
 Haibara-gun
 Shizuoka 421-0302 (JP)**

 • **OTA Shinya
 Tokyo 100-8405 (JP)**
 • **NAKAGAWA Koji
 Tokyo 100-8405 (JP)**
 • **NAKANO Atsushi
 Tokyo 100-8405 (JP)**
 • **NIHEI Toshifumi
 Tokyo 100-8405 (JP)**
 • **HATANO Maya
 Tokyo 100-8405 (JP)**
 • **YAMASHITA Shuichi
 Tokyo 100-8405 (JP)**

(74) Representative: **Müller-Boré & Partner
Patentanwälte PartG mbB
Friedenheimer Brücke 21
80639 München (DE)**

(54) **GLASS PLATE**

(57) The present invention relates to a single glass plate which is provided with a first surface and a second surface facing the first surface, and which has a curved portion that is curved in a first direction and in a second direction that is perpendicular to the first direction. The radius of curvature of the curved portion in the first direction is 8,500 mm or less, and at least a part of the first surface in the curved portion is chemically strengthened. The Na amount in the first surface is smaller than the Na amount in the second surface in the first direction within the chemically strengthened region in the curved portion.

FIG. 5

EP 3 279 157 A1

**Description**

Technical Field

The present invention relates to a glass sheet.

Background Art

Recently, as to the glass sheet used for automobiles, electronic members, etc., a glass sheet having various shapes or curvatures is required with changes in the design of an automobile or an electronic member. For example, a glass sheet having not a simple, one-direction single-curved shape (cylindrical shape) but a multi-curved shape at least partially curved in two orthogonal directions is required.

These glass sheets are strengthened to have a surface compressive stress and not be easily broken even when put into contact with sand, pebbles, etc. As the strengthening method, for example, an air tempering method described in Patent Document 1 is known.

Prior Art Literature

Patent Document

Patent Document 1: JP-A-S59-121127

Summary of the Invention

Technical Problems

However, in the case of the air tempering method described in Patent Document 1, it has been difficult to obtain a glass sheet having a different surface compressive stress between front and back surfaces. Accordingly, the glass sheet obtained in Patent Document 1 is not suitable for the application requiring different properties in terms of surface compressive stress between front surface and back surface.

In consideration of such circumstances, a main object of the present application is to provide a glass sheet having a multi-curved shape and having a different surface compressive stress between front and back surfaces.

Solution to Problems

In order to achieve the above object, the present invention provides a glass sheet, which is a single glass sheet having a first surface and a second surface facing the first surface, wherein:

the glass sheet has a curvature part curved in a first direction and a second direction orthogonal to the first direction;
a radius of curvature in the first direction of the curvature part is 8,500 mm or less;
at least a part of the first surface has been chemically strengthened in the curvature part; and
in the first direction within the chemically strengthened region in the curvature part, an Na amount in the first surface is smaller than the Na amount in the second surface.

Advantageous Effects of the Invention

In the present invention, a glass sheet having a multi-curved shape and having a different surface compressive stress between front and back surfaces is provided.

Brief Description of the Drawings

FIG. 1 is a perspective view of a curved, chemically strengthened glass sheet having a bowl shape in one embodiment of the present invention.
FIG. 2 is a perspective view of a curved, chemically strengthened glass sheet curved only at end parts in one embodiment of the present invention.
FIG. 3 is a perspective view of a curved, chemically strengthened glass sheet having a cylindrical-like shape in one embodiment of the present invention.

FIG. 4 is a perspective view of a curved, chemically strengthened glass sheet having a saddle shape in one embodiment of the present invention.

FIG. 5 is a graph illustrating the relationship between the ratio of the Na amount in the first surface to the Na amount in the second surface and the radius of curvature.

FIG. 6 is a graph illustrating how a bowl shape transforms into a cylindrical-like shape with a change in the sheet thickness and a change in the ratio of the Na amount in the first surface to the Na amount in the second surface.

Description of Embodiments

Specific embodiments of the present invention are described below by referring to the drawings.

In the drawings for describing respective embodiments, a coordinate is defined using arrows depicted at left lower corner in the figure and, if desired, the embodiment is described using the coordinate. In the present description, the "X direction" indicates not only a direction running from the base to the tip of an arrow representing the X coordinate but also a 180 degree reversed direction running from the tip to the base. Similarly, each of the "Y direction" and the "Z direction" indicates not only a direction running from the base to the tip of an arrow representing the Y or Z coordinate but also a 180 degree reversed direction running from the tip to the base.

In the present description, the expression "ratio between A and B" indicates the "value obtained by dividing, out of the values of A and B, a smaller value by a larger value".

In the present description, the "curved, chemically strengthened glass sheet" indicates a glass sheet having a curvature part curved in a multi-curved shape, in which at least a part of the curvature part has been chemically strengthened.

(First Embodiment)

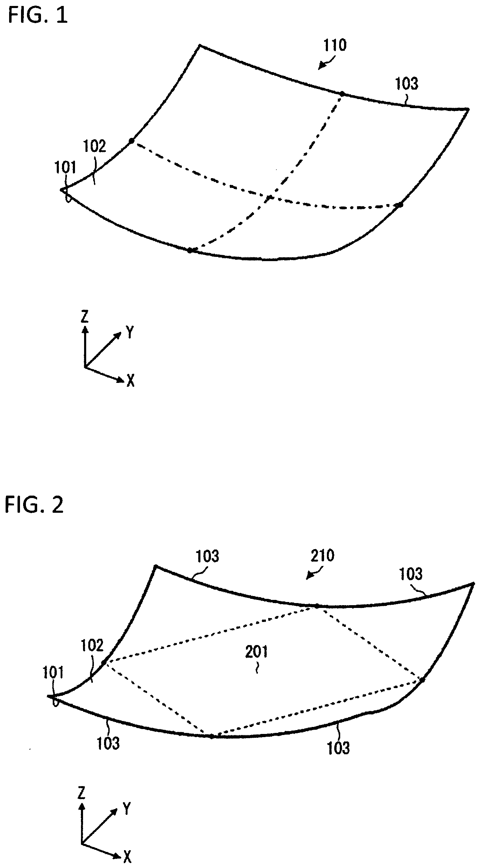

FIG. 1 illustrates a configuration view of the glass sheet in the first embodiment of the present invention. The glass sheet of this embodiment is a curved, chemically strengthened glass sheet 110 having a first surface 101 and a second surface 102 facing the first surface 101, in which at least the first surface 101 has been chemically strengthened.

The first surface 101 and the second surface 102 are preferably parallel to each other, but the present invention is not limited to this embodiment. That is, the distance between the first surface 101 and the second surface 102 (i.e., the thickness of the curved, chemically strengthened glass sheet) may vary.

In the following, an embodiment where at least the first surface 101 is chemically strengthened and the first surface 101 is a convex surface and the second surface 102 is a concave surface, is described. In addition, in the following, an embodiment where the whole of the first surface 101 is chemically strengthened is described, but this is not limitative, and only a part of the first surface 101 may be chemically strengthened.

The curved, chemically strengthened glass sheet 110 includes a curvature part 103 curved at least in two directions of a first direction (for example, the X direction in FIG. 1) and a second direction (for example, the Y direction in FIG. 1) orthogonal to the first direction.

Here, the phrase "curved in two directions of a first direction and a second direction" indicates that the glass sheet is curved when viewed in the cross-section along the first direction and at the same time, the glass sheet is curved when viewed in the cross-section along the second direction. In the following, the embodiment is described by taking the first direction as the X direction and the second direction as the Y direction, but this is not limitative, and as long as the first direction and the second direction are at right angles to each other, these directions may be any direction. For example, it may also be possible that the first direction is the Y direction and the second direction is the X direction.

In FIG. 1, the dot-and-dash line is a line passing the center of gravity of the glass sheet and falsely representing a curved shape along the first direction or a curved shape along the second direction.

In addition, FIG. 1 depicts, as an example, a glass sheet where the whole of the curved, chemically strengthened glass sheet is a curvature part 103, i.e., a glass sheet where the whole of the curved, chemically strengthened glass sheet is bent to have a multi-curved shape, but this is not limitative. For example, the glass sheet 210 may have a shape where, as illustrated in FIG. 2, only end parts are turned up to have a multi-curved shape. In this case, the turned-up end part is the curvature part 103.

In FIG. 2, the broken line is a line falsely representing a boundary between the curvature part and a part other than the curvature part. The region in the center of the glass sheet, surrounded by the broken line, is a non-curved flat part 201, and this shows that the glass sheet is curved toward its periphery from the broken line.

In the first direction of the curvature part 103, the radius of curvature is 8,500 mm or less, preferably 8,000 mm or less, more preferably 7,500 mm or less, still more preferably 7,000 mm or less. Within this range, the demand for the curved shape can be accommodated as required. In addition, the sharply bent shape enables a complicated curvature design.

In the first direction of the curvature part 103, the radius of curvature is preferably 1,000 mm or more, more preferably 1,500 mm or more, more preferably 2,000 mm or more. Within this range, a glass sheet having a bowl shape illustrated in FIG. 1 is stably obtained. The bowl shape makes it possible to impart a high bending-compressive stress to, among others, the peripheral portion on the second surface 102 side.

In addition, in the curvature part 103, at least a part of the first surface 101 is chemically strengthened, and in the first direction within the chemically strengthened region, the Na amount in the first surface is smaller than the Na amount in the second surface. Thanks to this configuration, a surface compressive stress differing between the front and back surfaces can be obtained. This means that the compressive stress on the first surface 101 side is higher than that on the second surface 102 side. Accordingly, while using the first surface 101 for usage requiring high compressive stress (for example, an exposed surface), the second surface 102 can be used for usage not requiring high compressive stress (for example, a non-exposed surface, e.g., on the intermediate film side of a laminated glass). By setting the compressive stress in the second surface 102 to be lower than that in the first surface 101, the internal tensile stress produced in response to the compressive stress can be reduced.

The present inventors have also found that when the Na amount in the first surface is smaller than the Na amount in the second surface, a curvature part 103 curved in a multi-curved shape can be formed by having a convex surface as the first surface 101. The reason therefor is considered to be that Na in the first surface 101 is substituted with a metal ion having a large ionic radius by chemical strengthening and the first surface 101 thereby expands. That is, the term "curvature part" as used in the present description indicates a curvature part that is curved to no small degree by elastic deformation. Accordingly, when the Na amount in the first surface is smaller than the Na amount in the second surface and the curvature part is thereby curved in a multi-curved shape, a bending-compressive stress (also referred to as stress in circumferential direction) can be imparted to, among others, the peripheral portion on the second surface 102 side. In other words, the strength of the glass sheet can be enhanced in the vicinity of edge where the strength of the glass sheet is relatively low.

Here, a phenomenon generally called "warpage" in chemically strengthened glass, and the glass obtained as a result thereof are described.

The warpage indicates that, for example, in the case of chemically strengthening a float glass, the degree of chemical strengthening delicately differs between the glass surface (hereinafter, sometimes referred to as top surface) not in contact with molten tin during float forming and the glass surface (hereinafter, sometimes referred to as bottom surface) in contact with molten tin during float forming and the flatness of the glass sheet is thereby lost after chemical strengthening. The glass sheet obtained as a result thereof is, for example, a chemically strengthened glass sheet curved to have a radius of curvature on the order of 10,000 mm or more.

Accordingly, the glass sheet warped by "warpage" is outside the scope of the curved shape specified in the present invention and is not encompassed by the present invention.

A curvature part curved in a multi-curved shape, where the radius of curvature in the first direction is 8,500 mm or less, may be formed by chemically strengthening a flat plate-shaped glass sheet such that the Na amount in the first surface becomes smaller than the Na amount in the second surface. Alternatively, a curvature part curved in a multi-curved shape, where the radius of curvature in the first direction is 8,500 mm or less, may be formed by chemically strengthening a glass sheet previously prepared in a curved shape such that the Na amount in the first surface becomes smaller than the Na amount in the second surface.

In the first direction within the chemically strengthened region of the curvature part 103, the value obtained by dividing the Na amount in the first surface by the Na amount in the second surface (Na amount in first surface/Na amount in second surface) is preferably 0.936 or less, more preferably 0.933 or less, still more preferably 0.929 or less, yet still more preferably 0.925 or less. Within this range, a surface compressive stress differing between front and back surfaces can be imparted, and a curvature part curved to have a radius of curvature of 8,500 mm or less can be formed in a flat plate-shaped glass sheet.

Furthermore, in the first direction within the chemically strengthened region in the curvature part 103, the ratio of the Na amount in the first surface to the Na amount in the second surface is preferably 0.825 or less, more preferably 0.818 or less, still more preferably 0.811 or less, yet still more preferably 0.803 or less. Within this range, a surface compressive stress differing between front and back surfaces can be imparted and, a curvature part curved to have a radius of curvature of 8,500 mm or less can be formed in a flat plate-shaped glass sheet. Among others, this embodiment is suitably used for a glass sheet having a composition that is less likely to form a curvature part.

In this case, the ratio of the Na amount in the first surface to the Na amount in the second surface in the first direction within the chemically strengthened region in the curvature part 103 is preferably 0.1 or more.

In the present description, the Na amount in the first surface indicates the intensity of K$\alpha$ trajectory measured by fluorescent X-ray (XRF) and indicates the Na amount in the region from the surface to a depth of 3 $\mu$m of the first surface 101. Similarly, the Na amount in the second surface indicates the intensity of K$\alpha$ trajectory measured by fluorescent X-ray (XRF) and indicates the Na amount in the region from the surface to a depth of 3 $\mu$m of the second surface 102. However, the Na amount is not limited to the X-ray intensity and may be measured by any method as long as the Na ratio between the first surface and the second surface can be calculated.

In the present description, for example, the "Na amount in the first surface and Na amount in the second surface in the first direction" means the Na amount in the first surface and Na amount in the second surface in a certain cross-section including the first direction, respectively. Here, the "Na amount in the first surface and Na amount in the second surface in the second direction" is also defined in accordance with the "Na amount in the first surface and Na amount in the second surface in the first direction".

The aspect ratio (component X: component Y, or component Y: component X) of the chemically strengthened region in the curvature part 103 is 1:20 or less, preferably 1:15 or less, more preferably 1:10 or less. With the aspect ratio in this range, the portion is more easily curved in a multi-curved shape. That is, a bending-compressive stress is readily imparted to, among others, the peripheral portion on the second surface 102 side.

As long as in the first direction of the curvature part 103, the radius of curvature is 8,500 mm or less and the Na amount in the first surface is smaller than the Na amount in the second surface within the chemically strengthened region in the curvature part 103, the radius of curvature in the second direction of the curvature part 103 may take any value, and the ratio of the Na amount in the first surface to the Na amount in the second surface in the second direction within the above-described region in the curvature part 103 may also take any value.

Here, in the second direction of the curvature part 103, the radius of curvature is preferably 8,500 mm or less, more preferably 8,000 mm or less, still more preferably 7,500 mm or less, yet still more preferably 7,000 mm or less. Within this range, the demand for the curved shape can be accommodated as required. In addition, the sharply bent shape enables a complicated curvature design.

In the second direction within the chemically strengthened region in the curvature part 103, the ratio of the Na amount in the first surface to the Na amount in the second surface is preferably 0.936 or less, more preferably 0.933 or less, still more preferably 0.929 or less, yet still more preferably 0.925 or less. Within this range, a surface compressive stress differing between front and back surfaces can be imparted and, a curvature part curved to have a radius of curvature of 8,500 mm or less in the second direction can be formed in a flat plate-shaped glass sheet.

In this way, each of the first direction and the second direction individually takes values of the radius of curvature and the ratio of the Na amount in the first surface to the Na amount in the second surface, and the glass sheet can thereby be curved in a multi-curved shape with a higher degree of freedom.

In the case where the first direction and second direction are orthogonal directions, as long as in the first direction and the second direction, the radius of curvature in both directions is preferably 750 mm or more, more preferably 1,000 mm or more, still more preferably 1,400 mm or more, and the ratio for the radii of curvature and the ratio of the Na amount in the first surface to the Na amount in the second surface are 0.70 or more, preferably 0.80 or more, more preferably 0.90 or more, a bowl shape curved symmetrically between the first direction and the second direction can be formed, and a curved, chemically strengthened glass sheet having more excellent design property is obtained.

The bowl shape indicates that in the curvature part above, the ratio between the radius of curvature in the first direction and the radius of curvature in the second direction is 0.50 or more, and within the chemically strengthened region in the curvature part, the ratio between the ratio of the Na amount in the first surface to the Na amount in the second surface in the first direction and the ratio of the Na amount in the first surface to the Na amount in the second surface in the second direction is 0.50 or more. With such a shape, a high bending-compressive stress can be imparted to, among others, the peripheral portion on the second surface 102 side.

The surface compressive stress in the first surface 101 is preferably 150 MPa or more, more preferably 200 MPa or more, still more preferably 250 MPa or more. Generally, in the air tempering method, it is difficult to produce a surface compressive stress exceeding 150 MPa, but by using a chemical strengthening method, a high surface compressive stress can be produced. With such a surface compressive stress, a curved, chemically strengthened glass sheet that is less likely to be broken when contacted or rubbed by a foreign matter is obtained.

As long as the Na amount in the first surface is smaller than the Na amount in the second surface, the second surface 102 may not be subjected to a chemical strengthening treatment. For example, when preparing a laminated glass for automobiles, the surfaces on the side laminated together with an intermediate film are not exposed and in turn, do not rub against sand or pebbles and therefore, a high surface compressive stress need not be produced. In the above embodiment, the second surfaces 102 not subjected to a chemical strengthening treatment may be arranged to serve as the surfaces on the side laminated together with an intermediate film.

The thickness of the curved, chemically strengthened glass sheet is not particularly limited but is, for example, preferably 0.1 mm or more and 1.5 mm or less, more preferably 0.1 mm or more and 1.3 mm or less, still more preferably 0.1 mm or more and 1.0 mm or less.

Within such a sheet thickness range, in the air tempering, it is difficult to produce a temperature difference particularly between the surface and the inside and achieve a high surface compressive stress. On the other hand, in this embodiment, a high surface compressive stress is achieved, irrespective of the sheet thickness.

In addition, by employing the sheet thickness range above, when the ratio of the Na amount in the first surface to the Na amount in the second surface is adjusted to fall within the preferable range of this embodiment, a curve, chemically strengthened glass sheet having a smaller radius of curvature is obtained. Accordingly, the glass sheet can be curved in a curved shape with a higher degree of freedom.

The glass sheet used in this embodiment is not particularly limited as long as it is ion-exchangeable, and, for example, a glass appropriately selected from a soda lime glass, an aluminosilicate glass, etc. may be used.

With respect to the composition of the glass sheet used in this embodiment, examples of the glass include, for example, a glass containing, as a composition represented by mol% on the oxide basis, from 50 to 80% of $SiO_2$, from 0 to 10% of $B_2O_3$, from 0.1 to 25% of $Al_2O_3$, from 3 to 30% of $Li_2O+Na_2O+K_2O$, from 0 to 25% of MgO, from 0 to 25% of CaO, from 0 to 5% of SrO, from 0 to 5% of BaO, from 0 to 5% of $ZrO_2$, and from 0 to 5% of $SnO_2$, but the composition is not particularly limited thereto. More specifically, examples of the composition includes the following glass compositions. Here, for example, the phrase "containing from 0 to 25% of MgO" means that MgO is not essential but may be contained up to 25%.

In addition, the glass sheet of this embodiment is, before chemical strengthening, a glass sheet having a uniform composition. That is, the glass sheet is composed of a single glass sheet and has a uniform composition at the center of the thickness direction of the glass sheet. The composition of the first surface and the second surface is changed by chemical strengthening. Since the glass sheet of this embodiment is a single glass sheet, the production is easy. Moreover, perspective distortion or fluctuation inside the thickness is less likely to occur in the glass sheet, and a glass sheet with good optical quality is obtained. Furthermore, since joining, etc. to a glass sheet having another composition is not performed, an interface is not present at the center in the thickness direction, and breakage hardly occurs. The "uniform composition" as used herein is construed to have latitude allowing for a mismatch within the range not deviating from the effects of the present application. The "center in thickness direction" is also construed to allow for a mismatch of about ±0.1 mm.

In the glass sheet of this embodiment, after chemical strengthening, the first surface and the second surface have substantially the same composition except for Na and K. Here, "substantially the same composition" is construed to have latitude allowing for a mismatch within the range not deviating from the effects of the present application.

(i) A glass containing, as a composition represented by mol% on the oxide basis, from 63 to 73% of $SiO_2$, from 0.1 to 5.2% of $Al_2O_3$, from 10 to 16% of $Na_2O$, from 0 to 1.5% of $K_2O$, from 5 to 13% of MgO, and from 4 to 10% of CaO.

(ii) A glass containing, as a composition represented by mol% on the oxide basis, from 50 to 74% of $SiO_2$, from 1 to 10% of $Al_2O_3$, from 6 to 14% of $Na_2O$, from 3 to 11% of $K_2O$, from 2 to 15% of MgO, from 0 to 6% of CaO, and from 0 to 5% of $ZrO_2$, in which the total of the contents of $SiO_2$ and $Al_2O_3$ is 75% or less, the total of the contents of $Na_2O$ and $K_2O$ is from 12 to 25%, and the total of the contents of MgO and CaO is from 7 to 15%.

(iii) A glass containing, as a composition represented by mol% on the oxide basis, from 68 to 80% of $SiO_2$, from 4 to 10% of $Al_2O_3$, from 5 to 15% of $Na_2O$, from 0 to 1% of $K_2O$, from 4 to 15% of MgO, and from 0 to 1% of $ZrO_2$.

(iv) A glass containing, as a composition represented by mol% on the oxide basis, from 67 to 75% of $SiO_2$, from 0 to 4% of $Al_2O_3$, from 7 to 15% of $Na_2O$, from 1 to 9% of $K_2O$, from 6 to 14% of MgO, and from 0 to 1.5% of $ZrO_2$, in which the total of the contents of $SiO_2$ and $Al_2O_3$ is from 71 to 75%, the total of the contents of $Na_2O$ and $K_2O$ is from 12 to 20%, and in the case of containing CaO, the content thereof is less than 1%.

(v) A glass containing, as a composition represented by mol% on the oxide basis, from 60 to 70% of $SiO_2$, from 0 to 10% of $B_2O_3$, from 8 to 15% of $Al_2O_3$, from 10 to 17% of $Na_2O$, from 0 to 3% of $K_2O$, from 0 to 10% of MgO, from 0 to 1% of CaO, and from 0 to 1% of $ZrO_2$, in which the total of the contents of $SiO_2$ and $Al_2O_3$ is from 76 to 81%, and the total of the contents of $Na_2O$ and $K_2O$ is from 13 to 16%.

(vi) A glass containing, as a composition represented by mol% on the oxide basis, from 60 to 70% of $SiO_2$, from 0 to 10% of $B_2O_3$, from 2 to 15% of $Al_2O_3$, from 10 to 17% of $Na_2O$, from 0 to 5% of $K_2O$, from 0 to 12% of MgO, from 0 to 10% of CaO, and from 0 to 1% of $ZrO_2$, in which the total of the contents of $SiO_2$ and $Al_2O_3$ is from 71 to 81%, and the total of the contents of $Na_2O$ and $K_2O$ is from 13 to 17%.

(Production Method of First Embodiment)

The method for producing a glass sheet in the first embodiment of the present application is described below.

The curved, chemically strengthened glass sheet according to the first embodiment is obtained through a coating step of coating a glass sheet surface with a chemical strengthening solution, and a firing step of firing the glass sheet coated with a chemical strengthening solution.

First, the chemical strengthening treatment of glass is described. The chemical strengthening treatment of glass is usually performed by immersing a glass sheet in a melt of a metal salt (e.g., potassium nitrate) containing a metal ion (e.g., K ion) having a large ionic radius so as to replace a metal ion (e.g., Na ion or Li ion) having a small ionic radius in the glass sheet with the metal ion having a large ionic radius, thereby forming a compressive layer in a glass sheet surface.

In the coating step, the glass surface to be chemically strengthened is coated with an inorganic salt mainly composed of nitrate, chloride, peroxide and perchlorate of an alkali metal.

Here, the surface coated with an inorganic salt may be, for example, only the first surface 101 of the glass sheet, in other words, only the first surface 101 may be chemically strengthened. In this way, by applying a chemical strengthening treatment to only either one surface of a glass sheet, a difference in the degree of chemical strengthening can be produced between the front and back surfaces of the glass sheet and in turn, the glass sheet can be curved.

The principle on which the glass sheet is curved is considered to be for the following reasons. That is, in the first surface 101 subjected to a chemical strengthening treatment, a metal ion having a small ionic radius, which is originally contained in the glass sheet, is replaced by a metal ion having a large ionic radius, and a compressive layer is thereby formed. On the other hand, in the second surface 102 not subjected to a chemical strengthening treatment, a compressive stress is not generated. It is considered that in the first surface having experienced replacement with a metal ion having a large ionic radius, a compressive layer is formed and expansion occurs to produce such deformation as to form a convex surface on the first surface 101 side.

In addition, as long as the degree of chemical strengthening differs between the first surface 101 and the second surface 102, not only the first surface 101 but also the second surface 102 may be coated with an inorganic salt.

The inorganic salt is not particularly limited in its composition, but contains, for example, a potassium compound. Examples of the potassium compound include, for example, $KNO_3$, $KCl$, $KBr$, $KI$, $KF$, and $K_2SO_4$. In addition, for example, an inorganic salt containing about 5% or less of a sodium compound such as $NaNO_3$, other than the potassium compound, may also be used.

In the inorganic salt, an additive such as solvent and thickener may be added. Examples of the solvent include, for example, a liquid in which a potassium compound can be dissolved, dispersed or suspended, or a substance based on the liquid, and may also be a solvent based on water or an alcohol. Examples of the thickener include, for example, an organic resin and an organic solvent.

As for the organic resin, a resin capable of decomposing at a heat treatment temperature may be used, and a resin easily removable by water washing is preferred. Examples of the resin include, for example, a cellulose resin, a methyl cellulose resin, a cellulose acetate resin, a cellulose nitrate resin, a cellulose acetate butyrate resin, an acrylic resin, and a petroleum resin, each having the above-described properties.

The organic solvent is preferably a solvent in which a metal compound and an organic resin can be easily dispersed and which readily volatilizes during drying, and more specifically, an organic solvent that is liquid at room temperature (20°C) and volatilizes at approximately from 50 to 200°C is preferred. Examples of such an organic solvent include, for example, alcohols such as methanol and ethanol, and ketones such as dimethyl ether and acetone.

The amount of an additive added to the inorganic salt for use in the present invention is not particularly limited.

In view of ease of coating, it is preferred that the viscosity of the inorganic salt for use in the present invention can be adjusted depending on each process. Examples of the method for adjusting the viscosity include, for example, a method of adding a clay such as kaolin, or a flowability modifier such as water or aluminosilicate fiber.

The viscosity of the inorganic salt for use in the present invention may be appropriately adjusted but, usually, the viscosity at 20°C is preferably from 200 to 100,000 mPa. The viscosity of the inorganic salt can be measured, for example, by a viscometer (PM-2B, manufactured by Malcom Co., Ltd.) or a viscosity cup (NK-2, manufactured by ANEST IWATA Corporation).

As to the method for applying the inorganic salt onto the front and back surfaces of the glass sheet, a conventional coater may be used, and the coater is not particularly limited, and examples thereof include, for example, a table coater, a curtain coater, a bar coater, a roll coater, a die coater, and a spray coater.

The heat treatment temperature in the firing step may be appropriately set depending on the kind of the inorganic salt and, usually, is preferably from 350 to 600°C, more preferably from 400 to 550°C.

The heat treatment time may be appropriately set and, usually, is preferably from 5 minutes to 10 hours, more preferably from 30 minutes to 4 hours, after reaching a predetermined heat treatment temperature.

The chemical strengthening treatment may be stopped, for example, by cleaning the chemically strengthened glass after heat treatment and thereby removing the inorganic salt on the surface.

In such a production method, the glass sheet can be formed in a curved shape simultaneously with chemical strengthening and therefore, as compared with a conventional production method of applying chemical strengthening after bending and forming, the process can be shortened.

In addition, when the ratio of the Na amount in the first surface to the Na amount in the second surface is 0.1 or more, the time required for the chemical strengthening step and forming step can be controlled to a proper range. More preferably, the treatment is performed so that the ratio of the Na amount in the first surface to the Na amount in the second surface can be 0.2 or more, and this is preferred from the viewpoint of shortening the time required in conventional production processes.

A modification example of the method for producing a glass sheet of the first embodiment of the present application is described below.

The curved, chemically strengthened glass sheet in the first embodiment is obtained through a coat-forming step of forming, on a glass sheet surface, a film composed of an inorganic material having an effect of suppressing chemical strengthening, and an immersion step of immersing the glass sheet in a chemical strengthening solution.

The film composed of an inorganic material is typically an oxide film, a nitride film, a fluoride film, a metal film, or a laminated film of these films.

Examples of the oxide include, but is not limited to, for example, an alkali-free oxide such as $TiO_2$ and $SiO_2$, a composite oxide containing an alkali element or an alkaline earth element, such as $LiMnO_4$ and $BaTiO_3$, and an alkali oxide such as $K_2O$ and $Na_2O$.

Examples of the nitride include, but is not limited to, for example, $Si_3N_4$, AlN, and BN.

Examples of the fluoride film include, but is not limited to, for example, $MgF_2$, $CaF_2$, $SrF_2$, and $BaF_2$.

Examples of the metal include, but is not limited to, for example, Ag and Cu.

The alkali-free oxide is an oxide composed of an element except for an alkali metal element and indicates an oxide or composite oxide containing one or more elements except for an alkali metal, an oxide or composite oxide of two or more kinds of elements, or a laminate of the oxides or composite oxides above.

The alkali-free oxide is preferably an oxide containing at least one or more kinds of oxides and composite oxides each composed of at least one kind of an element selected from the group consisting of silicon, titanium, tin, aluminum, zinc, chromium, steel, manganese, iron, cobalt, nickel, zirconium, silver, niobium, molybdenum, antimony and indium.

The film may be composed of only an oxide or may contain other compounds such as nitride, fluoride and sulfide and may be combined with any element. The film may also be a film doped with a small amount of a lanthanoid element, an actinoid element, etc.

Examples of the composite oxide containing an alkali element include, but is not limited to, for example, $LiMnO_4$ or $BaTiO_3$.

The content of the inorganic material in the film composed of an inorganic material is preferably 50 mass% or more, more preferably 70 mass% or more. When the content of the inorganic material in the film composed of an inorganic material is 50 mass% or more, an effect of suppressing chemical strengthening is appropriately obtained.

The film composed of an inorganic material may contain an H atom at an H atom concentration ranging from $1.0 \times 10^{15}$ to $1.0 \times 10^{19}$ atom/mm$^3$, preferably from 0.05 to 5 atm%. When an H atom is contained in the film composed of an inorganic material, the chemical structure in the film is changed to form a path for ions, i.e., the degree of suppression of chemical strengthening can be controlled.

Furthermore, when the content of H atom in the inorganic material is, in terms of H atom concentration, from $1.0 \times 10^{15}$ to $1.0 \times 10^{19}$ atom/mm$^3$, substitution of ions during chemical strengthening is facilitated, and a dense film is maintained.

Usually, the thickness of the film composed of an inorganic material is preferably from 5 to 600 nm, more preferably from 10 to 400 nm. When the film thickness is from 5 to 600 nm, an effect of suppressing chemical strengthening is appropriately obtained.

Examples of the method for forming the film composed of an inorganic material include, for example, a CVD (Chemical Vapor Deposition) method such as normal-pressure CVD method and plasma CVD method, a sputtering method, a wet coating method, and a vapor deposition method. Among these, from the viewpoint that the film can be easily deposited on a large area, a CVD method is preferred, and a normal-pressure CVD method is more preferred.

More specifically, a gas containing an inorganic material source and an oxide is supplied, and the inorganic material source is reacted with an oxidizing agent on a glass sheet surface to obtain a glass sheet having formed thereon a film composed of an inorganic material.

The inorganic material source is preferably an alkali-free source, and the alkali-free source is preferably a silicon source, a titanium source, a tin source or an indium source, but this is not limitative.

Examples of the silicon source includes, but is not limited to, for example, $SiH_4$, $SiHCl_3$, $SiH_2Cl_2$, $SiH_3Cl$, $SiCl_4$, $Si(CH_3)_2Cl_2$, $SiBr_4$, $SiI_4$, $SiF_4$, and $Si(OC_2H_5)_4$.

Examples of the titanium source includes, but is not limited to, for example, $Ti(O^iPr)_4$ and $TiCl_4$, wherein (O'Pr) represents an iso-propoxy group.

Examples of the tin source includes, but is not limited to, for example, $SnCl_4$, $n-C_4H_9SnCl_3$, tin acetate, $Sn(CH_3)_4$, and $(CH_3)_2SnCl_2$.

Examples of the indium source includes, but is not limited to, for example, $InCl_3$, $InBr_3$, and $In(NO_3)_3$.

Examples of the oxidizing agent includes, but is not limited to, for example, $O_2$, $O_3$, NO, $NO_2$, $N_2O$, CO, and $CO_2$.

The chemical strengthening treatment can be performed by an immersion step, for example, by immersing the glass sheet in a potassium nitrate solution at 300 to 550°C for 5 minutes to 20 hours. As for the ion-exchange conditions, optimal conditions may be selected from conventionally known conditions by taking into account the viscosity properties of glass, the usage, the sheet thickness, the tensile stress inside the glass, etc.

Examples of the molten salt for performing the ion exchange treatment include, for example, potassium nitrate, and an alkali sulfate salt and an alkali chloride salt, such as sodium sulfate, potassium sulfate, sodium chloride and potassium chloride. One of these molten salts may be used alone, or a plurality of kinds thereof may be used in combination.

(Second Embodiment)

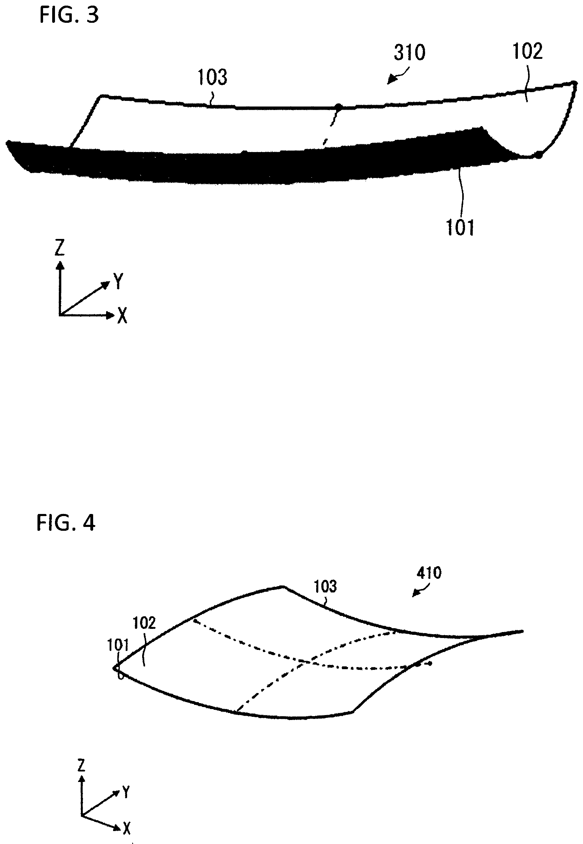

FIG. 3 is a view illustrating a curved, chemically strengthened glass sheet in the second embodiment of the present invention, and FIG. 4 is a modification example thereof. In FIG. 3 and FIG. 4, the member having the same configuration as the configuration illustrated in the first embodiment is denoted by the same reference numeral as in FIG. 1, and its description is omitted.

The second embodiment depicted in FIG. 3 is a chemically strengthened glass sheet curved in a multi-curved shape, in which the radius of curvature in the first direction is small and the radius of curvature in the second direction is large.

In this embodiment, in the curvature part, the radius of curvature in the first direction is 1,400 mm or less, preferably 1,000 mm or less, more preferably 750 mm or less and not only the ratio between the radius of curvature in the first and the radius of curvature in the second direction is 0.5 or less, but also within the chemically strengthened region in the curvature part, the ratio of the Na amount in the first surface to the Na amount in the second surface in the first direction is equal to the ratio of the Na amount in the first surface to the Na amount in the second surface in the second direction.

More specifically, in this embodiment, within the chemically strengthened region in the curvature part, the ratio of the Na amount in the first surface to the Na amount in the second surface in the first direction is equal to the ratio of the Na amount in the first surface to the Na amount in the second surface in the second direction, nevertheless, a shape which is close to cylindrical (hereinafter, sometimes referred to as a cylindrical-like shape) and in which the radius of curvature in the first direction is small and the radius of curvature in the second direction is large, is obtained.

Here, the radius of curvature in the first direction is preferably 1,200 mm or less, more preferably 1,000 mm or less. By setting the radius of curvature in the first direction to the value above, even when the ratio of the Na amount in the first surface to the Na amount in the second surface in the second direction is equal to that in the first direction, the radius of curvature in the second direction can be made large.

In the present description, "the ratio of the Na amount in the first surface to the Na amount in the second surface in the first direction being equal to the ratio of the Na amount in the first surface to the Na amount in the second surface in the second direction" not only encompasses complete agreement but also permits little mismatch. For example, the ratio between the ratio of the Na amount in the first surface to the Na amount in the second surface in the first direction and the ratio of the Na amount in the first surface to the Na amount in the second surface in the second direction is 0.9 or more, preferably 0.95 or more.

The "cylindrical-like shape" indicates that the ratio between the radius of curvature in the first direction and the radius of curvature in the second direction is 0.50 or less, preferably 0.40 mm or less, more preferably 0.30 mm or less.

When the ratio takes such a value, although the ratio of the Na amount in the first surface to the Na amount in the second surface in the second direction is at the same level as that in the first direction, a curved, chemically strengthened glass sheet curved in a multi-curved shape closer to cylindrical is obtained.

Furthermore, when the radius of curvature in the first direction is set to be 350 mm or less, an embodiment illustrated in FIG. 4 is sometimes obtained.

The embodiment of FIG. 4 is a chemically strengthened glass sheet in which the radius of curvature in the first direction of the curvature part is small and the radius of curvature in the second direction is a negative value. In the present description, the radius of curvature is defined as a positive value when the first surface 101 is a convex surface and the second surface 102 is a concave surface, and defined as a negative value when the first surface is a concave surface and the second surface is a convex surface. That is, in the embodiment illustrated in FIG. 4, the concave and convex surfaces in the second direction are reversed relative to those in the second direction, and the first surface is a concave surface and the second surface is a convex surface, respectively, and as a result, a curved, chemically strengthened glass sheet having a saddle shape, depicted in FIG. 4, is obtained.

Here, the radius of curvature in the first direction is preferably 300 mm or less, more preferably 250 mm or less, and by taking such a value, the absolute value of the radius of curvature in the second direction becomes small, making it possible to deform the glass sheet in a shape more emphasized by the saddle shape.

Examples

The present invention is described below by referring to Examples, but the present invention is not limited thereto.

(Example 1)

First, 0.4 mm-thick glass sheets having the following three kinds of compositions were prepared and each was cut into a size of 50 mm×50 mm to prepare a glass sheet.

The glass composition of Case 1 is composed of, as represented by mol%, $SiO_2$: 68.8%, $Al_2O_3$: 3.0%, $Na_2O$: 14.2%, $K_2O$: 0.2%, MgO: 6.2%, and CaO: 7.8%.

The glass composition of Case 2 is composed of, as represented by mol%, $SiO_2$: 64.4%, $Al_2O_3$: 8.0%, $Na_2O$: 12.5%, $K_2O$: 4.0%, MgO: 10.5%, CaO: 0.1%, SrO: 0.1%, BaO: 0.1%, and $ZrO_2$: 0.5%.

The glass composition of Case 3 is composed of, as represented by mol%, $SiO_2$: 67.0%, $B_2O_3$: 4.0%, $Al_2O_3$: 13.0%, $Na_2O$: 14.0%, $K_2O$: <1.0%, MgO: 2.0%, and CaO: 0.1%.

Subsequently, one surface (first surface) of each of glass sheets of Cases 1 to 3 was coated with a paste-like inorganic salt having the following composition to have a thickness of 1.5 mm by means of a table coater. The composition of the paste-like inorganic salt was water:$K_2SO_4$:$KNO_3$ = 6:5:1.

The glass sheet having only the first surface coated with the paste-like inorganic salt was transferred into a heating furnace and heat-treated at 400°C for 5 minutes, 15 minutes, 30 minutes, 60 minutes, 120 minutes or 240 minutes to produce 6 kinds of samples in which only the first surface of the glass sheet was subjected to a chemical strengthening treatment. The glass sheet was then cooled to room temperature and cleaned to remove the inorganic salt applied onto the first surface.

The curved, chemically strengthened glass sheets prepared above of Cases 1 to 3 were measured for the radius of curvature by the following method.

In the case where the whole of the glass sheet is a curvature part 103, the radius of curvature was determined from the depth of bend (camber) and the length of arc by taking an approximation assuming an identical curvature in the same direction. The depth of bend was measured by a contact-type surface profile analyzer "SURFCOM 1400D (trade name)" manufactured by Tokyo Seimitsu Co., Ltd., and the length of arc was set to be 50 mm.

In the case where only end parts are a curvature part 103 as illustrated in FIG. 2, the radius of curvature was determined by measuring the depth of bend in the curvature part 103 in the same manner and setting the length of arc to be the length in each of the first direction and the second direction of the curvature part 103 before deformation.

The ratio of the Na amount in the first surface to the Na amount in the second surface in the curvature part in each of Cases 1 to 3 was measured by means of fluorescent X-ray (XRF). Using an analyzer ZSX100e (manufactured by RIGAKU Corporation), the Na-Kα radiation X-ray intensity was measured for each of the first surface and the second surface, and the first surface Na/second surface Na intensity ratio was determined. Specific analysis conditions are shown below.

Measurement diameter: 20 mm
Output: Rh 50 kV-72 mA
Filter: OUT Attenuator: 1/1
Slit: Std
Dispersive crystal: TAP
Detector: PC
Peak angle (2θ/deg.): 55.163
Peak measurement time (second): 30
PHA: 100-320

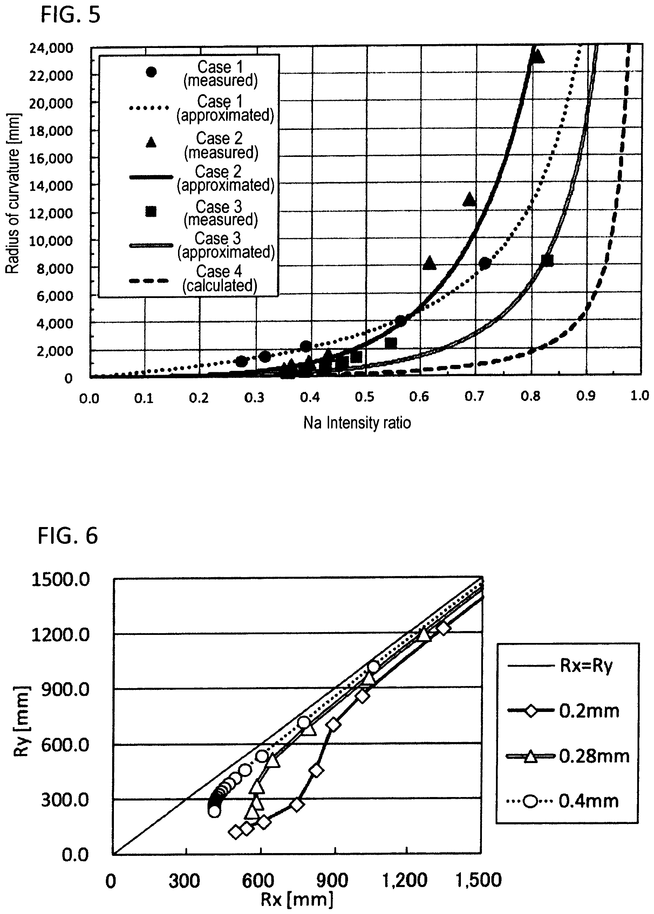

FIG. 5 is a graph illustrating the relationship between the ratio of the Na amount in the first surface to the Na amount in the second surface and the radius of curvature in Cases 1 to 3. Respective plots indicate the measured values of Cases 1 to 3, and respective lines indicate approximate lines derived from the plots of Cases 1 to 3.

In addition, when chemical strengthening is thought to be a phenomenon of forming a heterogeneous thin-film layer on the glass sheet surface layer, it is found from the following formula 1 (Stoney's formula) indicative of the internal stress of thin film that the surface compressive stress (internal stress of thin film) σ is a function of the ratio of the Na amount in the first surface to the Na amount in the second surface and is proportional to the square of the thickness of the glass sheet and inversely proportional to the radius of curvature.

Accordingly, utilizing the Stoney's formula, based on the result of Case 3 having best bendability out of Cases 1 to 3, the surface compressive stress in the case of the glass composition of Case 3 and a thickness of 0.2 mm could be calculated, and this was taken as Case 4.

[Math. 1]

(Formula 1)

$$\sigma = \frac{E_s t_s^2}{6(1 - v_s)Rt_F}$$

In the formula 1, characters indicate the followings: $\sigma$: internal stress of thin film, Es: Young's modulus of substrate, Vs: Poisson's ratio of substrate: ts: thickness of substrate, $t_F$: thickness of thin film, and R: radius of curvature of substrate.

In FIG. 5, out of all directions in the curvature part, the radius of curvature in the direction where the radius of curvature becomes minimum is depicted.

It was found from FIG. 5, based on Case 4 having best bendability due to the difference in Na amount between the first surface and the second surface, that when the ratio of the Na amount in the first surface to the Na amount in the second surface is 0.936 or less in any direction in the curvature part, unlike the case of "warpage" that is a region at a radius of curvature of 10,000 mm or more, a curved, chemically strengthened glass sheet having a radius of curvature of 8,500 mm or less is obtained.

In addition, there was obtained a curved, chemically strengthened glass sheet having a radius of curvature of 8,000 mm or less when the ratio of the Na amount in the first surface to the Na amount in the second surface was 0.933 or less, a curved, chemically strengthened glass sheet having a radius of curvature of 7,500 mm or less when the ratio of the Na amount in the first surface to the Na amount in the second surface was 0.929 or less, or a curved, chemically strengthened glass sheet having a radius of curvature of 7,000 mm or less when the ratio of the Na amount in the first surface to the Na amount in the second surface was 0.925 or less.

Here, when the ratio of the Na amount in the first surface to the Na amount in the second surface was 0.933 or less, in all of Cases 1 to 4, the surface compressive stress was 150 MPa or more.

(Example 2)

With respect to a glass sheet having the glass composition of Case 3, two kinds of 0.4 mm-thick glass sheets having a size of 50 mm×50 mm or a size of 100 mm×100 mm were prepared, coated with an inorganic salt in the same manner as in Example 1, and then heat-treated at 400°C for 5 minutes, 15 minutes, 30 minutes, 60 minutes, 120 minutes, and 240 minutes to produce 6 kinds of samples for each glass sheet. The curvature thereof was measured, and the results obtained are shown in Table 1.

Here, the first direction is the X direction, the second direction is the Y direction, and the X direction and the Y direction are orthogonal directions.

Table 1

| | | Radius of Curvature (mm) | |
|---|---|---|---|
| | | Case 3 (50 mm × 50 mm) | Case 3 (100 mm × 100 mm) |
| 5 min | X direction | 2626 | 3654 |
| | Y direction | 2377 | 2671 |
| 15 min | X direction | 1401 | 925 |
| | Y direction | 1417 | 11347 |
| 30 min | X direction | 1039 | 776 |
| | Y direction | 1132 | $7.7 \times 10^{10}$ |
| 60 min | X direction | 889 | 337 |
| | Y direction | 882 | -12295 |
| 120 min | X direction | 687 | 267 |
| | Y direction | 804 | 7394 |

(continued)

| | | Radius of Curvature (mm) | |
|---|---|---|---|
| | | Case 3 (50 mm × 50 mm) | Case 3 (100 mm × 100 mm) |
| 240 min | X direction | 359 | 181 |
| | Y direction | 1453 | -11459 |

As apparent from Table 1, when the curvature in the X direction is 1,000 mm or less, despite the fact that the ratio of the Na amount in the first surface to the Na amount in the second surface in the first direction and the ratio of the Na amount in the first surface to the Na amount in the second surface in the second direction are at the same level, a cylindrical-like shape having a small radius of curvature in the first direction and a large radius of curvature in the second direction was obtained. Furthermore, when the radius of curvature in the X direction is 350 mm or less, the radius of curvature in the Y direction sometimes takes a negative value, and a curved, chemically strengthened glass having a saddle shape was obtained.

(Example 3)

FIG. 6 is a graph illustrating how, in the glass sheet of Case 2, a bowl shape transforms into a cylindrical-like shape with a change in the sheet thickness and a change in the ratio of the Na amount in the first surface to the Na amount in the second surface.
With respect to three kinds of glass sheets having a thickness of 0.2 mm, a thickness of 0.28 mm, or a thickness of 0.4 mm, samples differing in the ratio of the Na amount in the first surface to the Na amount in the second surface were prepared and measured for the radius of curvature in the X direction and the Y direction.
In FIG. 6, the abscissa Rx shows the radius of curvature in the X direction and the ordinate Ry shows the radius of curvature in the y direction. In FIG. 6, the solid line shows the case of Rx = Ry, i.e., a bowl shape in which the radius of curvature in the X direction is equivalent to that in the Y direction.
It is found from FIG. 6 that when the radius of curvature is gradually reduced for each sheet thickness, a stable bowl shape can be formed while the plot transits parallel to the solid line of Rx = Ry.
On the other hand, it is found that at a value giving Ry/Rx of 0.7 or less, the difference between Rx and Ry becomes large and the shape is greatly changed from a bowl shape and transits to a cylindrical-like shape. The values giving Ry/Rx of 0.7 or less are specifically Ry = 706 mm for the sheet thickness of 0.2 mm, Ry = 516 mm for the sheet thickness of 0.28 mm, and Ry = 343 mm for the sheet thickness of 0.4 mm.
The results of Case 2 can reveal that the threshold value for changing a 0.2 mm-thick glass sheet from a bowl shape to a cylindrical-like shape is about two times the threshold value for changing a 0.4 mm-thick glass sheet from a bowl shape to a cylindrical-like shape, and when this is applied to Case 3 described in Example 2, in Case 3 having best bendability, the threshold value for changing a 0.2 mm-thick glass sheet from a bowl shape to a cylindrical-like shape is 1,373 mm. Accordingly, when the curvature of either one of the X-direction and the Y direction is 1,400 mm or less, preferably 1,000 mm or less, more preferably 750 mm or less, despite the fact that the ratio of the Na amount in the first surface to the Na amount in the second surface in the first direction is equal to the ratio of the Na amount in the first surface to the Na amount in the second surface in the second direction, a cylindrical-like shape having a small radius of curvature in the first direction and a large radius of curvature in the second direction was obtained.
While the invention has been described in detail and with reference to specific embodiments thereof, it will be apparent to one skilled in the art that various changes and modifications can be made therein without departing from the spirit and scope of the invention.
This application is based on Japanese Patent Application No. 2015-072002 filed on March 31, 2015, the entire subject matter of which is incorporated herein by way of reference.

Industrial Applicability

The present invention relates to a curved, chemically strengthened glass sheet and is suitably used for, among others, a windowpane for vehicles, a cover glass of vehicular interior members, a cover glass (decorative sheet) for vehicular trims, and a cover glass of electronic members.

Description of Reference Numerals and Signs

101: First surface
102: Second surface
103: Curvature part
110, 210, 310, 410: Curved, chemically strengthened glass sheet
201: Flat part

**Claims**

1. A glass sheet, which is a single glass sheet having a first surface and a second surface facing the first surface, wherein:

   the glass sheet has a curvature part curved in a first direction and a second direction orthogonal to the first direction;
   a radius of curvature in the first direction of the curvature part is 8,500 mm or less;
   at least a part of the first surface has been chemically strengthened in the curvature part; and
   in the first direction within the chemically strengthened region in the curvature part, an Na amount in the first surface is smaller than the Na amount in the second surface.

2. The glass sheet according to claim 1, wherein in the first direction within the region in the curvature part, a ratio of the Na amount in the first surface to the Na amount in the second surface is 0.936 or less.

3. The glass sheet according to claim 1 or 2, wherein the radius of curvature in the first direction of the curvature part is 7,000 mm or less, and in the first direction within the region in the curvature part, a ratio of the Na amount in the first surface to the Na amount in the second surface is 0.925 or less.

4. The glass sheet according to claim 2, wherein in the first direction within the region in the curvature part, the ratio of the Na amount in the first surface to the Na amount in the second surface is 0.825 or less.

5. The glass sheet according to any one of claims 1 to 4, wherein an aspect ratio of the region in the curvature part is 1:20 or less.

6. The glass sheet according to any one of claims 1 to 5, wherein a whole of the glass sheet is the curvature part.

7. The glass sheet according to any one of claims 1 to 6, wherein the curvature part has a multi-curved shape having a convex surface as the first surface and a concave surface as the second surface.

8. The glass sheet according to any one of claims 1 to 7, wherein the radius of curvature in the second direction of the curvature part is 8,500 mm or less, and within the region in the curvature part, a ratio of the Na amount in the first surface to the Na amount in the second surface is 0.936 or less.

9. The glass sheet according to any one of claims 1 to 8, wherein in the curvature part, a ratio between the radius of curvature in the first direction and a radius of curvature in the second direction is 0.50 or more, and within the region in the curvature part, a ratio between a ratio of the Na amount in the first surface to the Na amount in the second surface in the first direction and a ratio of the Na amount in the first surface to the Na amount in the second surface in the second direction is 0.50 or more.

10. The glass sheet according to any one of claims 1 to 7, wherein in the curvature part, the radius of curvature in the first direction is 1,400 mm or less, a ratio between the radius of curvature in the first direction and a radius of curvature in the second direction is 0.50 or less, and within the region in the curvature part, a ratio of the Na amount in the first surface to the Na amount in the second surface in the first direction is equal to a ratio of the Na amount in the first surface to the Na amount in the second surface in the second direction.

11. The glass sheet according to any one of claims 1 to 6, wherein in the curvature part, the radius of curvature in the first direction is 350 mm or less, a radius of curvature in the second direction is a negative value, and within the region in the curvature part, a ratio of the Na amount in the first surface to the Na amount in the second surface in the first direction is equal to a ratio of the Na amount in the first surface to the Na amount in the second surface in the second direction.

**12.** The glass sheet according to any one of claims 1 to 11, wherein in the first direction within the region in the curvature part, a ratio of the Na amount in the first surface to the Na amount in the second surface is 0.1 or more.

**13.** The glass sheet according to any one of claims 1 to 12, wherein the second surface is a surface ion-exchanged by chemical strengthening.

**14.** The glass sheet according to any one of claims 1 to 13, wherein a thickness of the glass sheet is 0.1 mm or more and 1.5 mm or less.

**15.** The glass sheet according to any one of claims 1 to 14, wherein a composition at the center in a thickness direction of the glass sheet comprises, as a composition represented by mol% on the oxide basis, from 60 to 70% of $SiO_2$, from 0 to 10% of $B_2O_3$, from 2 to 15% of $Al_2O_3$, from 10 to 17% of $Na_2O$, from 0 to 5% of $K_2O$, from 0 to 12% of MgO, from 0 to 10% of CaO, and from 0 to 1% of $ZrO_2$, in which a total of the contents of $SiO_2$ and $Al_2O_3$ is from 71 to 81%, and a total of the contents of $Na_2O$ and $K_2O$ is from 13 to 17%.

FIG. 1

FIG. 2

FIG. 3

FIG. 4

## FIG. 5

## FIG. 6

## INTERNATIONAL SEARCH REPORT

| International application No. |
|---|
| PCT/JP2016/059252 |

### A. CLASSIFICATION OF SUBJECT MATTER

*C03C21/00*(2006.01)i, *B60J1/00*(2006.01)i, *C03B23/023*(2006.01)i, *C03C3/083*(2006.01)i, *C03C3/085*(2006.01)i, *C03C3/087*(2006.01)i, *C03C3/091*(2006.01)i, *C03C3/093*(2006.01)i, *C03C17/22*(2006.01)i, *C03C17/23*(2006.01)i

According to International Patent Classification (IPC) or to both national classification and IPC

### B. FIELDS SEARCHED

Minimum documentation searched (classification system followed by classification symbols)
C03C21/00, B60J1/00, C03B23/023, C03C3/083, C03C3/085, C03C3/087, C03C3/091, C03C3/093, C03C17/22, C03C17/23

Documentation searched other than minimum documentation to the extent that such documents are included in the fields searched
Jitsuyo Shinan Koho     1922–1996     Jitsuyo Shinan Toroku Koho   1996–2016
Kokai Jitsuyo Shinan Koho  1971–2016   Toroku Jitsuyo Shinan Koho   1994–2016

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | US 2011/0293928 A1 (WINTEK CORP.),<br>01 December 2011 (01.12.2011),<br>paragraphs [0020], [0025] to [0026], [0034] to [0036], [0039]; fig. 4, 7<br>& TW 201141808 A | 1-10,12-14<br>15<br>11 |
| Y<br>A | WO 2013/094479 A1 (Asahi Glass Co., Ltd.),<br>27 June 2013 (27.06.2013),<br>paragraph [0075]<br>& US 2014/0302330 A1<br>paragraph [0089]<br>& CN 104039730 A          & KR 10-2014-0113909 A | 15<br>1-14 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>26 April 2016 (26.04.16) | Date of mailing of the international search report<br>17 May 2016 (17.05.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/059252

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2015-13774 A  (Nippon Electric Glass Co., Ltd.),<br>22 January 2015 (22.01.2015),<br>paragraphs [0001] to [0005], [0030] to [0031];<br>fig. 4<br>& WO 2015/002283 A1 | 1-15 |
| A | JP 2014-224012 A  (Nippon Electric Glass Co., Ltd.),<br>04 December 2014 (04.12.2014),<br>paragraphs [0001] to [0003]<br>& WO 2014/185383 A1    & TW 201504170 A | 1-15 |
| A | JP 2013-245158 A  (Nippon Electric Glass Co., Ltd.),<br>09 December 2013 (09.12.2013),<br>paragraphs [0004], [0046] to [0047]<br>(Family: none) | 1-15 |
| A | JP 2000-233949 A  (Ishizuka Glass Co., Ltd.),<br>29 August 2000 (29.08.2000),<br>claims<br>(Family: none) | 1-15 |
| A | JP 2012-528062 A  (Saint-Gobain Glass France),<br>12 November 2012 (12.11.2012),<br>claims; fig. 1a<br>& US 2012/0070624 A1    & WO 2010/136702 A1<br>& FR 2945985 A          & KR 10-2012-0017433 A<br>& CN 102448750 A | 1-15 |
| A | JP 2008-152027 A  (Topcon Corp.),<br>03 July 2008 (03.07.2008),<br>claims; paragraph [0019]<br>(Family: none) | 1-15 |
| A | JP 2014-97908 A  (Nippon Electric Glass Co., Ltd.),<br>29 May 2014 (29.05.2014),<br>claims; paragraph [0033]<br>(Family: none) | 1-15 |
| P,A | JP 2015-98426 A  (Fujiwara Kogyo Co., Ltd.),<br>28 May 2015 (28.05.2015),<br>claims; paragraph [0034]<br>(Family: none) | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S59121127 A
- JP 2015072002 A